# EUROPEAN PATENT SPECIFICATION

(11) **EP 2 392 504 B1**
(45) Date of publication and mention of the grant of the patent: **05.06.2013**
(21) Application number: 10165080.2
(22) Date of filing: 07.06.2010
(51) Int. Cl.: B62D 21/15, B62D 25/04, B62D 25/06, B62D 29/00

(54) **Side impact structure and vehicle**
Seitliche Aufpralldämpfungsstruktur für ein Fahrzeug
Structure d'absorption des chocs latéraux pour véhicule

(43) Date of publication of application: 07.12.2011
(73) Proprietor: Volvo Car Corporation, 405 31 Göteborg (SE)
(72) Inventor: Amundsson, Krister, 43349, Partille (SE); Dahlström, Stefan, 44252, Ytterby (SE); Wästlund, Camilla, 43159, Mölndal (SE)
(74) Representative: Widahl, Jenny Marie

(56) References cited:
- EP-A2- 0 816 520
- WO-A1-97/30882
- WO-A1-2009/030730
- US-A1- 2006 097 549

## Description

### TECHNICAL FIELD

The present invention concerns a side impact structure for a vehicle. The present invention also concerns a vehicle comprising at least one such side impact structure.

### BACKGROUND OF THE INVENTION

By law, all new car models must pass certain safety tests and certifying procedures in different countries or regions, such as side impact tests, for example pole side impact tests, before they are sold.

Several side impact structures for vehicles having improved side impact crash behaviour have been disclosed in the prior art. For example, US patent no. 6 524 404 discloses a B-pillar, i.e. a pillar that supports the roof of a vehicle and that is located between the front and rear side windows, having improved crash behaviour and which constitutes a longitudinal steel profile. The longitudinal profile has a first (upper) longitudinal portion comprised of a martensitic material structure and a strength of more than 1400 N/mm² and has a second (lower) longitudinal portion of higher ductility (or so called "soft zone") with a predominantly ferritic-perlitic material structure and a strength of below 850 N/mm².

International publication no. WO 2009/064236 discloses a B-pillar for a vehicle which is fastened between a roof member and a sill member of the vehicle. The pillar has a martensitic structure and the steel has a tensile strength of at least 1300 MPa. Close to the lower fastening portion there is a soft zone with a tensile strength of less than 800 MPa. This soft zone has a height of at least 30 mm, extends over less than 1/3 of the pillar height, and is so positioned that the lower fastening portion is martensitic.

Document US 2006/0097549 A1 discloses on A-pillar according to the preamble of claim 1.

### SUMMARY OF THE INVENTION

An object of the present invention is to provide an improved side impact structure for a vehicle in the form of an A-pillar, i.e. a structural support on a side of a vehicle's windscreen located just ahead of and above the vehicle's front doors.

This object is achieved by the subject-matter of independent claim 1, whereby a side impact structure comprises boron steel containing at least one soft zone, i.e. a zone of increased deformability and ductility, arranged to be located in the upper part of the side impact structure when the side impact structure is mounted in a vehicle, whereby the side impact structure comprises at least two component parts that are attached together. The at least one soft zone comprises mainly ferritic pearlitic material having a tensile strength of 800 MPa or less.

According to an unclaimed embodiment of the invention the roof rail contains at least one soft zone. An "A-pillar" is normally considered to extend up to the point where the A-pillar meets a B-pillar. An A-pillar according to the present invention may however also be considered to include structural component that forms a continuation of the A-pillar that extends above the doors of the vehicle along the roof of the vehicle. This A-pillar/roof rail may contain at least one soft zone located rearwards of the point where the A-pillar meets the B-pillar of the vehicle. An A-pillar and a C-pillar together may form the roof rail in some vehicles. Alternatively, a roof rail may be provided between vehicle pillars (between the A- and B-pillar and/or between the B- and C-pillar etc.) in vehicles such as estate cars or station wagons.

According to an embodiment of the invention the A-pillar comprises hardened boron steel in the lower part thereof when it is mounted in a vehicle. The hardened boron steel comprises martensitic material having a tensile strength of 1300 MPa or higher.

According to another embodiment of the invention the at least one soft zone is arranged to be located substantially in the upper half, upper third or upper quarter of the side impact structure when it is mounted in a vehicle.

Conventionally, it has been considered to be advantageous to have a high strength A-pillar, and roof rail in order to provide protection in side impacts, particularly in pole side impacts. The inventors have however found that while it is advantageous to have A-pillar or roof rail with high strength in its lower part, an A-pillar, or roof rail is preferable in more ductile material.

It has namely been found that in the event of side impact collisions, cracks may form in the upper part of a vehicle's side impact structures, which may consequently result in passenger compartment intrusion. In the event of a side impact collision the side impact structure according to the present invention will not crack, or it will be substantially less likely to crack in the region(s) of the at least one soft zone due to the increased ductility in said region(s) and will therefore improve the vehicle's ability to survive the side impact without suffering passenger compartment intrusion.

Furthermore, a side impact structure comprising boron steel is stiffer and more lightweight than a side impact structure comprising normal steel on account of the alloys that have been added during manufacture, thereby making a vehicle having at least one front impact structure according to the present invention safer and more fuel-efficient.

Different manufacturing methods may be used to produce a side impact structure according to the present invention. It may be manufactured by hot forming which involves heating blanks of boron steel to over 900°C and then quenching and shaping them during controlled cooling processes in order to impart different strengths to different parts of the boron steel structures.

According to an embodiment of the invention a soft zone may for example extend over at least 100 mm, 400mm or 700 mm or over one quarter, one third or one half of the total A- or roof rail length.

A side impact structure according to the present invention may have a uniform or nonuniform thickness, varying between 0.8 to 2.5 mm for example, more preferably 1-1,5 mm. The A-piller has a tensile strength of 1300 MPa or higher in regions excluding the at least one soft zone, and a tensile strength of 800 MPa or lower in the region of the at least one soft zone.

The present invention also concerns a vehicle comprising at least one side impact structure according to any of the embodiments of the present invention.

### BRIEF DESCRIPTION OF THE DRAWING

The present invention will hereinafter be further explained by means of non-limiting examples with reference to the appended schematic figure where;

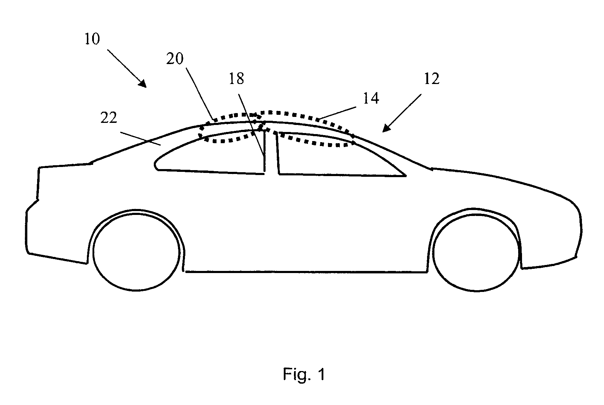

- Figure 1: shows a vehicle having an A-pillar according to an embodiment of the embodiment of the invention.

It should be noted that the drawings may not have been drawn to scale and that the dimensions of certain features may have been exaggerated for the sake of clarity.

### DETAILED DESCRIPTION OF EMBODIMENTS

Figure 1 shows a vehicle 10 according to an embodiment of the invention, which comprises an A-pillar 12. The A-pillar 12 comprises boron steel containing at least one soft zone 14, i.e. one or a plurality of soft zones of any size and shape and extension and having the same, or a plurality of different tensile strengths, located substantially in the upper half of the A-pillar 12 when the A-pillar 12 is mounted in the vehicle 10. The A-pillar comprises at least two component parts that are attached together. In the invention, a first upper component part of the A-pillar or roof rail constitutes a soft zone or comprises a soft zone with a tensile strength of 800 Mpa or less. A second lower part of the A-pillar is substantially constituted of hardened boron steel having a tensile strength of 1300 Mpa or more.

The dotted circle 14 in figure 1 indicates the area in which at least one soft zone 14 is located when the A-pillar has been mounted on the vehicle 10. The at least one soft zone 14 is namely located in the upper region of the A-pillar 12. In the illustrated embodiment part of the A-pillar 12 extends from a bottom corner of the windscreen to the top of the B-pillar 18 of the vehicle 10 and the at least one soft zone is located in the upper half of this part of the A-pillar. Should the vehicle 10 be subject to a pole side impact collision, crack formation in the upper half of the A-pillar will be reduced or eliminated.

Figure 1 also shows a dotted circle 20 that indicates the part of a roof rail which may contain at least one soft zone 20. In the illustrated embodiment the roof rail is constituted by the upper part of the A-pillar 12 and the upper part of the C-pillar 22. Should the vehicle 10 be subject to a pole side impact collision, crack formation in that part of the roof rail will be reduced or eliminated.

## Claims

1. A-pillar (12) for a vehicle (10) which comprises boron steel containing at least one soft zone (14, 20) arranged to be located in the upper part of the A-pillar (12) when the A-pillar is mounted in a vehicle (10), whereby said A-pillar (12) comprises at least two component parts that are attached together, **characterized in that** a first upper component part of the A-pillar (12) constitutes a soft zone and has a tensile strength of 800 Mpa or less and a second lower component part of said A-pillar (12) is substantially constituted of hardened boron steel having a tensile strength of 1300 Mpa or more.

2. A-pillar (12) according to claim 1, **characterized in that** said at least one soft zone (14) is arranged to be located substantially in the upper half, upper third or upper quarter thereof when it is mounted in a vehicle (10).

3. A-pillar (12) according to any of the preceding claims, **characterized in that** said at least one soft zone extends over at least 100 mm, 400 mm or 700 mm or over one quarter, one third or one half of the total length of the side impact structure.

4. Vehicle (10), **characterized in that** it comprises at least one A-pillar (12) according to any of the preceding claims.

## Patentansprüche

1. A-Säule (12) für ein Fahrzeug (10), die Borstahl umfasst und mindestens eine weiche Zone (14, 20) enthält, die so angeordnet ist, dass sie sich im oberen Teil der A-Säule (12) befindet, wenn die A-Säule in einem Fahrzeug (10) angebracht ist, wobei die A-Säule (12) mindestens zwei aneinander befestigte Bestandteile umfasst, **dadurch gekennzeichnet, dass** ein erster oberer Bestandteil der A-Säule (12) eine weiche Zone bildet und eine Zugfestigkeit von 800 Mpa oder weniger aufweist und ein zweiter unterer Bestandteil der A-Säule (12) im Wesentlichen aus gehärtetem Borstahl mit einer Zugfestigkeit von 1300 Mpa oder mehr besteht.

2. A-Säule (12) nach Anspruch 1, **dadurch gekennzeichnet, dass** die mindestens eine weiche Zone (14) so angeordnet ist, dass sie sich im Wesentlichen in der oberen Hälfte, dem oberen Drittel oder oberen Viertel der A-Säule befindet, wenn sie in einem Fahrzeug (10) angebracht ist.

3. A-Säule (12) nach einem der vorhergehenden Ansprüche, **dadurch gekennzeichnet, dass** sich die mindestens eine weiche Zone über mindestens 100 mm, 400 mm oder 700 mm oder über ein Viertel, ein Drittel oder eine Hälfte der Gesamtlänge der Seitenaufprallstruktur erstreckt.

4. Fahrzeug (10), **dadurch gekennzeichnet, dass** es mindestens eine A-Säule (12) nach einem der vorhergehenden Ansprüche umfasst.

## Revendications

1. Montant A (12) pour un véhicule (10), qui comprend de l'acier au bore et contient au moins une zone molle (14, 20) agencée pour être située dans la partie supérieure du montant A (12) lorsque le montant A est monté dans un véhicule (10), ledit montant A (12) comprenant de ce fait au moins deux parties constitutives qui sont attachées ensemble, **caractérisé en ce qu'**une première partie constitutive supérieure du montant A (12) constitue une zone molle et présente une résistance à la traction de 800 MPa ou moins et une deuxième partie constitutive inférieure dudit montant A (12) est essentiellement constituée d'acier au bore trempé présentant une résistance à la traction de 1300 MPa ou plus.

2. Montant A (12) selon la revendication 1, **caractérisé en ce que** ladite au moins une zone molle (14) est agencée de manière à être située essentiellement dans la moitié supérieure, le tiers supérieur ou le quart supérieur de ce montant A lorsqu'il est monté dans un véhicule (10).

3. Montant A (12) selon l'une quelconque des revendications précédentes, **caractérisé en ce que** ladite au moins une zone molle s'étend sur au moins 100 mm, 400 mm ou 700 mm ou sur un quart, un tiers ou la moitié de la longueur totale de la structure d'absorption des chocs latéraux.

4. Véhicule (10), **caractérisé en ce qu'**il comprend au moins un montant A (12) selon l'une quelconque des revendications précédentes.
